# EUROPEAN PATENT APPLICATION

(11) **EP 0 765 841 A2**
(43) Date of publication of application: **02.04.1997**
(21) Application number: 96306947.1
(22) Date of filing: 24.09.1996
(51) Int. Cl.: C01B 31/08, C01B 31/14, B01J 21/18

(54) **Activated carbon and process for producing the same**

(30) Priority: 26.09.1995 JP 247682/95
(71) Applicant: MITSUBISHI CHEMICAL CORPORATION, Chiyoda-ku, Tokyo (JP)
(72) Inventor: Yoshino, Yoshio, c/o Mitsubishi Chem. Corp., Kitakyushu-shi, Fukuoka-ken (JP); Matsumoto, Atsushi, c/o Mitsubishi Chem. Corp., Kitakyushu-shi, Fukuoka-ken (JP); Ohishi, Kimitoshi, c/o Mitsubishi Chem. Corp., Kitakyushu-shi, Fukuoka-ken (JP); Yoshida, Akihide, c/o Mitsubishi Chem. Corp., Kitakyushu-shi, Fukuoka-ken (JP)
(74) Representative: Woods, Geoffrey Corlett

(57) **Abstract**

An activated carbon has a BET specific surface area of not less than 1,000 m²/g when measured at a relative pressure of 0.05 to 0.15 in a nitrogen adsorption isotherm, and a difference in BET specific surface area between a powder abraded from the particle surface of said activated carbon in an amount of 10% by weight based on the total weight of the activated carbon and the remaining particle core, of more than 0 m²/g to not more than 100 m²/g.

A process for producing an activated carbon comprises:
blending 5 to 70% by weight of non-caking coal with 95 to 30% by weight of caking coal to form a blended coal;
molding and carbonizing said blended coal; and
activating the carbonized priduct in an oxidizing gas atmosphere.

## Description

The present invention relates to an activated carbon and a process for producing the activated carbon, and more particularly to a coal-based activated carbon useful as an adsorbent in the field of gas phase treatments such as recovery of solvents, separation and purification of gases, flue gas desulfurization, a carrier for catalysts or the like.

In the fields of recovery of solvents or separation and purification of gases to which adsorption techniques using an activated carbon are applied, it is one of important factors to reduce a running cost from an economical viewpoint. In order to accomplish the reduction in running cost, it is required to cause the activated carbon to exhibit its inherent performance to a sufficient extent and decrease a pressure loss which directly affects the running cost. Accordingly, it is important that the activated carbon as an adsorbent has a large grain size and exhibits an high adsorbing property.

In the production of the activated carbon, a raw material is generally activated by chemicals or gases. In the case of conducting the gas activation to prepare a granular activated carbon, an outer surface of the granular carbonized material is more frequently brought into contact with the activating gas as compared to an inner core portion thereof. For this reason, a difference in degree of activation between the inside and outside of the granular activated carbon becomes more remarkable as a particle size thereof is increased, so that it is difficult to achieve the production of uniformly activated carbon. More specifically, in the case of the gas activation, the granular carbonized material undergoes more excessive activation at a neighborhood of the particle surface as the particle size thereof is increased. The excessive activation of the neighborhood of the particle surface causes fine pores formed therein to be lost, so that a steam cannot be diffused in an interior of the granular carbonized material, resulting in deteriorated activation and increased difference in degree of activation between the inside and outside of the resultant activated carbon (uneven activation in radial direction of the activated carbon particle). Thus, it becomes difficult to exhibit an effect of fine pores. Further, when the granular carbonized material is excessively activated at the neighborhood of the particle surface thereof, the particle surface has a small mechanical strength. Consequently, there arises a problem that such activated carbon, is likely to undergo powdering during the subsequent treatments.

Thus, in the method in which the granular carbonized material having a large particle size is activated by gas, it is difficult to obtain an activated carbon having an excellent adsorptivity, a high specific surface area and a sufficient mechanical strength, because of the increased difference in degree of activation between the inside and outside thereof. Accordingly, in order to produce a granular activated carbon having a large particle size without such a difference in degree of activation between the inside and outside thereof, it is required to (I) granulate a uniformly activated carbon powder with a binder, or (ii) uniformly impregnating the raw coal material with the activating chemical, molding the resultant coal material and heating (baking) the molded product in an inert gas atmosphere to conduct a dehydration and oxidation reaction, thereby producing fine porous activated carbon.

As a result of the present inventors' intense studies, it has been found that, by using as a raw coal material a mixture of caking coals and non-caking coals, conducting the carbonization of the mixture preventing effectively from the melting and crystal-growth of the raw coal material, so that the carbonized product exhibits a high reactivity to the activation, and by heating the carbonized product which shows a high activation reactivity in an atmosphere of an oxidizing gas such as a steam, a carbon dioxide gas or air to partially burn thereby forming fine bores, the thus-obtained activated carbon has a BET high specific surface area and is sufficiently activated to the inside thereof which is in less contact with the activating gas. The present invention has been attained on the basis of the afore-mentioned finding.

It is an object of the present invention to provide an activated carbon having a high specific surface area, and exhibiting a low powdering upon handling and a low pressure loss.

It is another object of the present invention to provide a process for producing such an activated carbon, especially by gas activation.

To accomplish the aims, in a first aspect of the present invention, there is provided a granular activated carbon having a BET specific surface area of not less than 1,000 m²/g when measured at a relative pressure of 0.05 to 0.15 in a nitrogen adsorption isotherm, and a difference in BET specific surface area between a powder abraded from a particle surface of the activated carbon in an amount of 10 % by weight based on the total weight of the activated carbon and a remaining particle core, of from more than 0 m²/g to not more than 100 m²/g.

In a second aspect of the present invention, there is provided a process for producing an activated carbon, comprising the steps of blending 5 to 70 % by weight of non-caking coals with 95 to 30 % by weight of caking coals to form blended coals, molding and carbonizing the blended coals, and activating the carbonized product in an oxidizing gas atmosphere.

In accordance with the present invention, a mixture comprising caking coals and non-caking coals at a particular ratio (hereinafter referred to as "blended coals") is used as a raw coal material.

As the caking coals used in the present invention, sub-bituminous coals and bituminous coals both having a slight-, low- or high-caking property, may be exemplified. The caking coals can be used singly or in the form of a mixture of any two or more thereof. On the other hand, as the non-caking coals used in the present invention, lignite, brown coals, sub-bituminous coals and smokeless coals may be exemplified. These non-caking coals can be used singly or in the form of a mixture of any two or more thereof. Especially, it is preferred that bituminous coals having a high-caking property is used-as the caking coals and brown coals is used as the non-caking coals.

The blending percentage of the non-caking coals is in the range of 5 to 70 % by weight, preferably 30 to 50 % by weight based on a total weight of the blended coals. When the blending percentage of the non-caking coals is more than 70 % by weight, the resulting activated carbon exhibits insufficient mechanical strength. On the other hand, when the blending percentage of the non-caking coals is less than 5 % by weight, the inside portion of the blended coals is insufficiently activated so that a difference in degree of activation between the inside and outside of the particle of the activated carbon (uneven activation along the radial direction of the particle of the activated carbon) becomes large and the specific surface area of the resulting activated carbon is lowered.

The blending percentages of the caking and non-caking coals may be determined such that the average reflectance of the blended coals is in the range of 0.6 to 1.2, preferably 0.7 to 1.0. Thus, if the blended coals having an average reflectance within the afore-mentioned range is used, the resulting activated carbon can show an especially preferred specific surface area. On the other hand, if the blended coals having an average reflectance out of the afore-mentioned range is used, there may a tendency that the specific surface area of the resulting activated carbon becomes lowered. The average reflectance of the blended coals can be calculated by the blending percentages of the caking coal and non-caking coal and an average reflectance of each raw coal material which is measured according to Japanese Industrial Standards (JIS) M-8816.

The blending percentages of the caking and non-caking coals is preferably selected such that the blended coals has an rigidity index (RI) of 10 to 95, more preferably 30 to 95. Incidentally, the rigidity index is a value representing a strength of carbonized coals. If the rigidity index is less than 10, the resulting activated carbon has somewhat deteriorated mechanical strength. On the other hand, if the rigidity index is more than 95, the activation of the inside of the carbonized product derived from the blended coals may become lowered, so that the difference in degree of activation between the inside and outside of the particle of the activated carbon (uneven activation along the radial direction of the particle of the activated carbon) may be increased, whereby there may be a tendency that the specific surface area of the activated carbon is decreased.

The rigidity index of the blended coals can be measured in the following manner.

Three grams of sample coals are charged into a crucible having a interior volume of 30 ml. After a surface of the sample coals is leveled, a 110 g weight is placed on the leveled sample coals, and compressed and densified for 30 seconds while further applying a load of 6 kg on the weight. Next, the 110 g weight is removed from the sample coals and the crucible is covered with a lid. Thereafter, the crucible is placed in a muffle furnace which is maintained at a temperature of 850 ± 10°C, and heated and baked for 15 minutes. After cooling, the baked sample coals are removed from the crucible and divided into four parts. An entire part of the sample coals is filled in an I-shaped drum which is a cylindrical container having a diameter of 25 mm φ and a length of 300 mm L. After the I-shaped drum is rotated for 100 revolutions at 1.8 rpm, the content of the I-shaped drum is screened through a sieve having a mesh size of 1 mm. The weight percentage of unscreened coals based on the total weight of the sample coals is determined as the rigidity index of the blended coals.

The blended coals having an rigidity index within the afore-mentioned range are then finely pulverized into particles having a normal particle size, for example, in the range of 40 to 250 µm, and then molded using a known method. The molding of the pulverized blended coals may be normally carried out by means of a briquetting machine, a pelletizer, an extrusion-molding machine, a rotary granulator or the like. The pulverized blended coals may be directly molded into granules of a spherical shape, an almond shape, a pillow shape or a cylindrical shape having a diameter of not less than 1 mm, preferably 2 to 100 mm, more preferably 3 to 100 mm. Alternatively, after being molded into coarse granules, the resulting blended coals are pulverized again to form granules having a particle size within the afore-mentioned range.

The thus-molded blended coals are placed in a rotary furnace, a fluidized-bed furnace or a moving-bed furnace, and then dried and carbonized using either external heating system and/or internal heating system. Thereafter, the blended carbonized product is heated in an atmosphere of an oxidizing gas such as a steam, a carbon dioxide gas or air to prepare an activated carbon.

The activated carbon according to the present invention can be readily produced by the afore-mentioned method according to the present invention. Specifically, the obtained activated carbon has a BET specific surface area of not less than 1,000 m²/g, preferably 1,000 to 3,500 m²/g when measured at a relative pressure of 0.05 to 0.15 in the adsorption isotherm, and a difference in a BET specific surface area between a powder obtained by abrading a particle surface of the activated carbon in an amount of 10 % by weight based on the total weight of the activated carbon and a remaining particle core in an amount of 90 % by weight based on the total weight of the activated carbon, of more than 0 but not more than 100 m²/g. Furthermore, by using the method according to the present invention, it becomes possible to readily prepare an activated carbon having an average particle size as large as not less than 1 mm, preferably 2 to 5 mm.

In the method according to the present invention, the blended coals as a raw material is prevented from crystal growth or melting upon carbonization, so that the carbonized product derived from the blended coals can be sufficiently activated even at an inside portion thereof. As a result, the difference in degree of activation between the inside and outside of the particle of the activated carbon (uneven activation in the radial direction of the particle of the activated carbon) is suppressed to a minimum level so that an activated carbon having a large specific surface area can be produced.

The activated carbon according to the present invention exhibits a high adsorptivity due to a uniform degree of activation over the surface to the inside thereof, and is effectively prevented from powdering due to its high mechanical strength. Accordingly, in the case where the activated carbon according to the present invention is applied to water or gas treatment, a thickness of a layer composed of the activated carbon can be decreased and a flow rate of water or a gas to be treated can be increased. Further, a service life up to reuse or replacement can be prolonged.

### EXAMPLES:

The present invention is described in more detail by way of examples. However, the examples are only illustrative and therefore the present invention is not limited to the examples.

### Example 1:

60 parts by weight of high-caking coals having an average reflectance of 1.2 was mixed with 40 parts by weight of brown coals having an average reflectance of 0.5. The mixture was finely pulverized by means of a hammer mill to form blended coals having an average particle size of 75 to 250 µm. The obtained blended coals had a rigidity index (RI) of 90. The obtained blended coals were molded by a twin roll-type pressing machine and then crushed by means of an impact mill to form granules having an average particle size of 2 mm to 5 mm. The thus-obtained crushed coals were dried in an external heating-type rotary kiln while passing a gaseous mixture of nitrogen and oxygen therethrough. Thereafter, a temperature in the external heating-type rotary kiln was raised from 400°C to 700°C at a rate of 3.3°C per minute while passing only a nitrogen gas therethrough, and maintained at 700°C for 30 minutes to carbonize the coals. In the external heating-type rotary kiln, the thus-obtained carbide was activated at 1,020°C flowing a gaseous mixture composed of 50 % by volume of nitrogen and 50 % by volume of steam until a yield of an activated carbon reached 40 % by weight based on the weight of the carbide. The resulting activated carbon was abraded at the particle surface thereof to separate a powder from the particle core. The removed powder and the particle core of the activated carbon were respectively measured for the specific surface area thereof. The results are shown in Table 1.

In Table 1, a difference in degree of activation between the inside and outside of the activated carbon, which is a value representing unevenness in activation in the radial direction of the particle of the activated carbon, was measured in the following manner. Meanwhile, the difference in degree of activation between the inside and outside of the activated carbon is represented by a difference between the measured specific surface area of the powder abraded from the particle surface of the activated carbon in an amount of 10 % by weight based on the total weight of the activated carbon, and the measured specific surface area of the remaining particle core in an amount of 90 % by weight based on the total weight of the activated carbon. The difference in specific surface area was measured as follows.

That is, grain sizes of sample activated carbon were measured according to Japanese Industrial Standards (JIS) K-1474 and 1 % by weight of the sample activated carbon having a lower grain size was removed therefrom. The remainder of the sample activated carbon was charged into a cylinder through a vibrating feeder to weigh 100 ml of the sample activated carbon according to ASTM D2854-70. After it was ascertained that an amount of the sample activated carbon to be charged was A (g), the sample activated carbon were charged into a tray for hardness test according to Japanese Industrial Standards (JIS) K-1474. The tray was installed to a screen shaker. The screen shaker was caused to vibrate so as to abrade the particle surface of the sample activated carbon without powdering of the particles of the activated carbon. The vibration of the screen shaker was continued until approximately not less than 10 % by weight, normally about 10 % to about 13 % by weight based on the weight of the sample activated carbon (A (g)) charged was passed through a sieve (JIS standard sieve) having a sieve opening which is two grades below a lowest grain size of the sample activated carbon.

The abraded powder from the particle surface of the sample activated carbon, which was passed through the sieve having a sieve opening which is two grades below a lowest grain size of the sample activated carbon, was referred to as "surface powder", while the remainder thereof, which was not passed through the sieve, was referred to as "particle core." The BET specific surface areas (at a relative pressure of 0.05 to 0.15 in the adsorption isotherm) of the surface powder and the particle core were measured by a method in which a liquid nitrogen was used. Then, a difference in the BET specific surface area between the surface powder and the particle core was calculated. The afore-mentioned procedure was separately carried out five times to obtain an average value of the difference in BET specific surface area, which was determined as a difference in degree of activation between the inside and outside of the particle of the activated carbon.

### Example 2:

Activated carbon was produced by in the same manner as in Example 1 except that the crushed coals having an average particle size of 4 mm to 7 mm were used. The thus-prepared activated carbon was measured for various properties in the same manner as in Example 1. The results are also shown in Table 1.

### Comparative Example 1:

Activated carbon was produced by the same manner as in Example 1 except that the non-caking coals were not blended, namely the raw coal material composed of the high-caking coals solely was used. The thus-prepared activated carbon was measured for various properties in the same manner as in Example 1. The results are also shown in Table 1.

### Comparative Example 2:

Activated carbon was produced by the same manner as in Example 2 except that the non-caking coals were not blended, namely the raw coal material composed of the high-caking coals solely was used. The thus-prepared activated carbon was measured for various properties in the same manner as in Example 1. The results are also shown in Table 1.

**Table 1**

| | Average particle size of activated carbon (mm) | BET Specific surface area | | | Difference in degree of activation between the inside and out side thereof (m²/g) | JIS hardness (%) |
|---|---|---|---|---|---|---|
| | | Entire activated carbon (m²/g) | Surface powder (m²/g) | Particle core (m²/g) | | |
| Example 1 | 1.5 | 1130 | 1150 | 1100 | 50 | 95 |
| Example 2 | 3.0 | 1100 | 1150 | 1060 | 90 | 92 |
| Comparative Example 1 | 1.5 | 1100 | 1200 | 1000 | 200 | 90 |
| Comparative Example 2 | 3.0 | 1000 | 1150 | 900 | 250 | 80 |

## Claims

1. An activated carbon having a BET specific surface area of not less than 1,000 m²/g when measured at a relative pressure of 0.05 to 0.15 in a nitrogen adsorption isotherm, and a difference in BET specific surface area between a powder abraded from the particle surface of said activated carbon in an amount of 10% by weight based on the total weight of the activated carbon and the remaining particle core, of more than 0 m²/g to not more than 100 m²/g.

2. Carbon according to claim 1 having an average particle size of not less than 1mm.

3. A process for producing an activated carbon, comprising:
blending 5 to 70% by weight of non-caking coal with 95 to 30% by weight of caking coal to form a blended coal;
molding and carbonizing said blended coal; and
activating the carbonized product in an oxidizing gas atmosphere.

4. A process according to claim 3, wherein said blended coal has an average reflectance of 0.6 to 1.2.

5. Use of carbon according to claim 1 or 2 as an adsorbent or catalyst carrier.
